# DEMANDE DE BREVET EUROPEEN

(11) **EP 2 562 400 A1**
(43) Date de publication de la demande: **27.02.2013**
(21) Numéro de dépôt: 12171555.1
(22) Date de dépôt: 11.06.2012
(51) Int. Cl.: F02D 41/02, F02D 41/00, F02D 13/02

(54) **Procédé de régénération d'un filtre à particules de moteur à combustion interne**

(30) Priorité: 23.08.2011 FR 1157466
(71) Demandeur: PEUGEOT CITROËN AUTOMOBILES SA, 78140 Velizy-Villacoublay (FR)
(72) Inventeur: Camescasse, Cyril, 95150 Taverny (FR)

(57) **Abrégé**

L'invention porte sur un procédé de régénération d'un filtre à particules d'un moteur à combustion interne comportant un injecteur de carburant (15) à destination d'une chambre de combustion (13), une soupape d'admission (11) et/ou une soupape d'échappement (12) à calage d'ouverture variable, le procédé comprenant une étape de maintien simultané de la soupape d'admission et de la soupape d'échappement ouvertes, ladite étape de maintien étant dépourvue d'injection de carburant à destination de la chambre de combustion.

## Description

L'invention concerne la dépollution des moteurs à combustion interne.

Les gaz d'échappement des moteurs à combustion interne équipant la plupart des véhicules automobiles contiennent un certain nombre de polluants dont il est souhaitable de réduire les rejets dans l'atmosphère (notamment des oxydes d'azote, du monoxyde de carbone, des hydrocarbures imbrûlés, des particules et du dioxyde de carbone). Les réglementations applicables en matière de pollution par des véhicules automobiles abaissent régulièrement les plafonds de rejets acceptables. Le plafond de rejet des oxydes d'azote a ainsi subi plusieurs baisses progressives. Par ailleurs, un certain nombre de législations ont mis en place une fiscalité tenant compte de la quantité de dioxyde de carbone émise. Les niveaux de rejet de fines particules (principalement générées par les moteurs diesel) tolérés sont également fréquemment abaissés.

Afin de réduire la quantité de suie émise, la plupart des véhicules à moteurs diesel sont dorénavant équipés de filtres à particules montés sur la ligne d'échappement. Dorénavant, il est en outre envisagé d'équiper également des véhicules à moteur à allumage commandé de filtres à particules.

Le filtre à particules stocke les particules émises par la combustion du moteur. Pour éviter que le filtre à particules ne soit saturé, des régénérations du filtre à particules sont générées à intervalles réguliers. Pour cela, la combustion du moteur est modifiée transitoirement pour accroître la température des gaz d'échappement jusqu'à un niveau assurant la combustion des suies et en présence d'une quantité d'oxygène suffisante à l'échappement.

La problématique d'un système de filtre à particules est qu'il est nécessaire de brûler les suies stockées avant une certaine limite appelé MSL (pour Mass Soot Limit en langue anglaise), sans quoi une régénération induirait une exotherme trop importante qui endommagerait le substrat du filtre.

Avec un moteur à allumage commandé, on a généralement températures de gaz d'échappement suffisantes à l'entrée ou à l'intérieur du filtre à particules, c'est-à-dire supérieures à 450°C, voire supérieures à 500°C. Ces niveaux de températures sont obtenues d'une part du fait du fonctionnement du moteur et surtout d'autre part grâce à l'exotherme du catalyseur disposé en amont.

La difficulté pour atteindre les conditions de régénération vient de la rareté de l'oxygène dans les gaz d'échappement du moteur à allumage commandé puisque celui-ci fonctionne dans des conditions de richesse stoechiométrique du fait du fonctionnement de son système de dépollution. Le moteur peut même fonctionner en sur-richesse pour des raisons de protection de composants d'échappement. Seules des conditions de phases de leviers de pied permettent d'obtenir de l'oxygène en amont du filtre à particules. De telles conditions ne sont parfois pas rencontrées sur de longues distances par exemple en roulage autoroutier.

Il n'existe pas de solution satisfaisante connue pour gérer la régénération d'un tel filtre à particules. Actuellement, les solutions suivantes sont envisagées mais sont peu satisfaisantes:

- la régulation de la richesse à un niveau pauvre. Cette solution détériore les performances du moteur, son niveau de dépollution et son agrément (stabilité). Cette solution est impossible à utiliser lors des phases de sur-richesse de protection;

- l'injection d'air à l'échappement. Cette solution est adaptée pour les phases de faible charge (débit/pression) mais pas pour les phases de fortes charges (autoroute par exemple) sans modification de la pompe d'injection d'air ;

- placer une canalisation reliant l'aval du compresseur et l'aval de la turbine pour un moteur turbocompressé. Cette solution est coûteuse et difficile à implanter.

L'invention vise à résoudre un ou plusieurs de ces inconvénients. L'invention porte ainsi sur un procédé de régénération d'un filtre à particules d'un moteur à combustion interne comportant un injecteur de carburant à destination d'une chambre de combustion, une soupape d'admission et/ou une soupape d'échappement à calage d'ouverture variable, le procédé comprenant une étape de maintien simultané de la soupape d'admission et de la soupape d'échappement ouvertes, ladite étape de maintien étant dépourvue d'injection de carburant à destination de la chambre de combustion.

Selon une variante, l'étape de maintien est mise en oeuvre à cheval sur la phase d'échappement et sur la phase d'admission du cycle moteur.

Selon encore une variante, ladite étape de maintien est précédée de l'ouverture de la soupape d'échappement et débute avec l'ouverture de la soupape d'admission.

Selon une autre variante, la fermeture de la soupape d'échappement est retardée.

Selon encore une autre variante, l'étape de maintien débute par une ouverture anticipée de la soupape d'admission.

Selon une variante, ledit injecteur de carburant du moteur est configuré pour injecter du carburant directement dans la chambre de combustion, l'étape de maintien se terminant par la fermeture de la soupape d'échappement, le procédé comprenant une étape d'injection de carburant dans la chambre de combustion postérieurement à la fermeture de la soupape d'admission.

Selon une variante, l'étape de maintien est réalisée sur au moins 30° d'angle du cycle moteur.

Selon une autre variante, le moteur à combustion interne mis en oeuvre est un moteur à allumage commandé.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un moteur à combustion interne à allumage commandé muni d'une ligne d'échappement avec un système de post-traitement ;
- la figure 2 est une vue en coupe schématique d'une chambre de combustion durant une régénération selon l'invention ;
- la figure 3 est un diagramme illustrant le calage des soupapes durant le cycle moteur ;
- la figure 4 est un diagramme illustrant les pressions à l'admission et à l'échappement durant le cycle moteur.

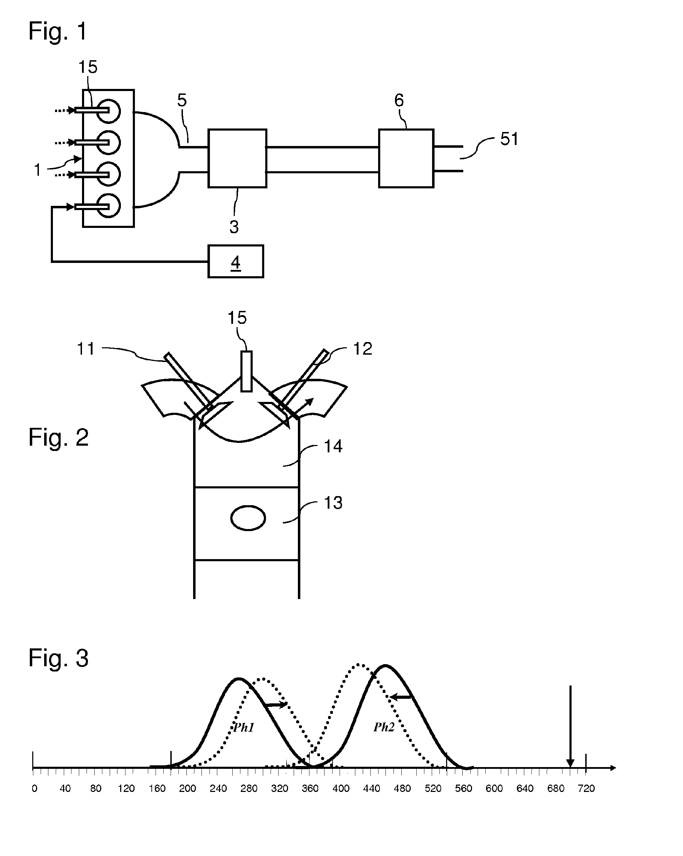

La figure 1 représente schématiquement un moteur à combustion interne 1, en particulier un moteur à allumage commandé. Le moteur 1 peut typiquement être monté dans un véhicule automobile. Le moteur 1 est muni d'une ligne d'échappement 5. La ligne d'échappement 5 comprend un catalyseur 3, par exemple un catalyseur trois voies. La ligne d'échappement 5 comprend également un filtre à particules 6. Le filtre à particules 6 est disposé en aval du catalyseur 3. La ligne d'échappement 5 présente un orifice de sortie 51 en aval du filtre à particules.

Le moteur 1 est muni d'un calculateur de contrôle moteur 4. De façon connue en soi, le calculateur de contrôle moteur 4 commande un certain nombre de composants du moteur 1 non représentés (par exemple des injecteurs de carburant 15, des bougies d'allumage, une valve d'admission d'air, une vanne de recyclage des gaz d'échappement, etc...) pour définir les paramètres de fonctionnement de ce moteur 1, en fonction de différentes valeurs mesurées et en fonction de différentes cartographies. Le calculateur de contrôle moteur 4 enregistre également un certain nombre de paramètres de fonctionnement du moteur 1, tels que la température des gaz d'échappement, une température ambiante, ou une vitesse moyenne du véhicule ou encore un couple instantané du moteur.

La figure 2 est une vue en coupe schématique du moteur 1 au niveau d'un cylindre. Un piston 13 est monté coulissant dans une chambre de combustion 14. Une soupape d'admission 11 est commandée par un arbre à came pour mettre sélectivement en communication un conduit d'admission avec la chambre de combustion 14. Une soupape d'échappement 12 est commandée par un arbre à came pour mettre sélectivement en communication la ligne d'échappement 5 avec la chambre de combustion 14. Un injecteur 15 est configuré pour réaliser des injections de carburant directement dans la chambre de combustion 14.

Selon l'invention, une régénération du filtre à particules 6 est réalisée en ménageant un balayage de l'air d'admission vers l'échappement en disposant d'une quantité suffisante d'oxygène dans le filtre à particules 6. Ainsi, durant une étape de maintien, on maintient simultanément ouvertes la soupape d'admission 11 et la soupape d'échappement 12. Lors du maintien ouvert de la soupape d'admission 11 et de la soupape d'échappement 12, de l'oxygène est balayé directement du conduit d'admission au conduit d'échappement. Cet apport d'oxygène dans la ligne d'échappement est suffisant pour régénérer les suies piégées dans le filtre à particules, les températures d'échappements étant suffisamment élevées.

Durant l'étape de maintien, aucune injection de carburant n'intervient pour éviter une combustion et garantir que l'oxygène atteigne le filtre à particules, de sorte que les conditions de régénération sont atteintes dans le filtre à particules.

L'étape de maintien se termine par la fermeture de la soupape d'échappement 12. Une étape d'injection de carburant est réalisée dans la chambre de combustion 14 postérieurement à la fermeture de la soupape d'admission.

L'étape de maintien est réalisée au moyen d'une distribution à calage d'ouverture variable. L'admission peut ainsi comporter un déphaseur d'arbre à came pour la soupape d'admission 11 et/ou un déphaseur d'arbre à came pour la soupape d'échappement 12. L'étape de maintien peut ainsi être réalisée en retardant la fermeture de la soupape d'échappement 12 ou en avançant l'ouverture de la soupape d'admission 11. Sur le diagramme illustré à la figure 3 (le trait plein correspond au calage en fonctionnement normal du moteur, le trait discontinu correspond au calage lors d'une régénération), l'étape de maintien est réalisée en retardant la fermeture de la soupape d'échappement 12 et en avançant l'ouverture de la soupape d'admission 11. L'étape de maintien est précédée de l'ouverture de la soupape d'échappement 12 et débute avec l'ouverture de la soupape d'admission 11. L'étape de maintien est réalisée au point mort haut basse pression, à cheval sur la phase d'échappement (ph1) et sur la phase d'admission (ph2). L'étape de maintien inclut avantageusement l'ouverture simultanée de la soupape d'admission 11 et de la soupape d'échappement 12 sur au moins 30 d'angle de cycle moteur, de préférence sur au moins 40 ° et préférentiellement sur au moins 50°.

Lors des phases de forte charge et de faible régime du moteur, le calculateur 4 peut déclencher une phase de régénération avec stratégie de balayage d'oxygène provenant des conduits d'admission.

Lors du fonctionnement moteur sur un point stabilisé pendant une période durant laquelle la quantité de suies stockée dans le filtre à particules devient critique, le calculateur 4 pourra activer la stratégie de balayage d'oxygène provenant des conduits d'admissions vers les conduits d'échappement.

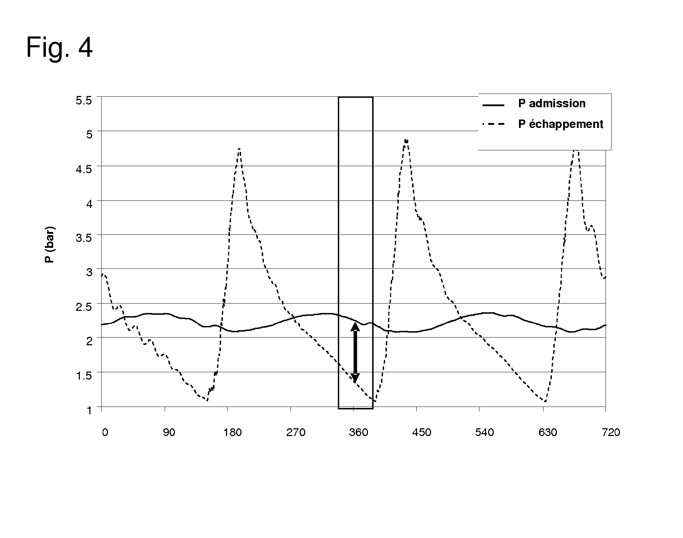

Lorsque le moteur est suralimenté, on bénéficie d'une forte pression d'admission obtenue grâce au turbocompresseur durant l'étape de maintien, comme cela est illustré sur le diagramme de la figure 4. Comme illustré, la pression d'admission est nettement supérieure à la pression d'échappement durant l'étape de maintien, ce qui favorise le balayage de l'air d'admission vers l'échappement.

Dans le cas d'un point de fonctionnement régime/charge moteur nécessitant une richesse supérieure à 1 afin de protéger des composants, la stratégie de balayage d'oxygène devra être précédée par un retour à la richesse 1 afin de ne pas créer de post combustion dans la ligne d'échappement. Afin de ne pas endommager sérieusement de composants durant cette phase à richesse 1, la phase de régénération du filtre à particules est réalisée le plus rapidement possible avec balayage d'air d'admission tout en respectant les critères de protection des composants (qui peuvent être majorés durant une très courte période).

Les principaux avantages du procédé de régénération selon l'invention sont :

- L'absence de composant supplémentaire pour mettre en oeuvre la régénération, et donc un surcoût très limité ;

- La possibilité d'apporter de l'oxygène au filtre à particules sur de nombreux point de fonctionnement régime/charge moteur, et donc de créer/contrôler des phases de régénérations même dans les conditions les plus sévères (ville à rythme très lent/autoroute à rythme rapide) ;

- La possibilité de régénérer le filtre à particules pendant les phases de protection de composants.

Dans l'exemple illustré, le moteur est à injection directe de carburant. L'invention s'applique bien entendu également à un moteur à injection indirecte de carburant. Bien que le moteur n'ait été illustré que schématiquement, celui-ci peut être muni d'une suralimentation ou non.

## Revendications

1. Procédé de régénération d'un filtre à particules d'un moteur à combustion interne comportant un injecteur de carburant (15) à destination d'une chambre de combustion (13), une soupape d'admission (11) et/ou une soupape d'échappement (12) à calage d'ouverture variable, le procédé comprenant une étape de maintien simultané de la soupape d'admission et de la soupape d'échappement ouvertes, ladite étape de maintien étant dépourvue d'injection de carburant à destination de la chambre de combustion.

2. Procédé de régénération selon la revendication 1, dans lequel ladite étape de maintien est mise en oeuvre à cheval sur la phase d'échappement et sur la phase d'admission du cycle moteur.

3. Procédé de régénération selon la revendication 2, dans lequel ladite étape de maintien est précédée de l'ouverture de la soupape d'échappement (12) et débute avec l'ouverture de la soupape d'admission (11).

4. Procédé de régénération selon la revendication 3, dans lequel la fermeture de la soupape d'échappement (12) est retardée.

5. Procédé de régénération selon la revendication 3 ou 4, dans lequel l'étape de maintien débute par une ouverture anticipée de la soupape d'admission (11).

6. Procédé de régénération selon l'une quelconque des revendications précédentes, dans lequel ledit injecteur de carburant (15) du moteur est configuré pour injecter du carburant directement dans la chambre de combustion (13), l'étape de maintien se terminant par la fermeture de la soupape d'échappement (12), le procédé comprenant une étape d'injection de carburant dans la chambre de combustion (13) postérieurement à la fermeture de la soupape d'admission (11).

7. Procédé de régénération selon l'une quelconque des revendications précédentes, dans lequel l'étape de maintien est réalisée sur au moins 30° d'angle du cycle moteur.

8. Procédé de régénération selon l'une quelconque des revendications précédentes, dans lequel le moteur à combustion interne mis en oeuvre est un moteur à allumage commandé.
